# EUROPEAN PATENT APPLICATION

(11) **EP 4 075 372 A1**
(43) Date of publication of application: **19.10.2022**
(21) Application number: 22168466.5
(22) Date of filing: 14.04.2022
(51) Int. Cl.: G06Q 50/30, G06Q 99/00

(54) **METHOD OF CALCULATING A CARBON CREDIT**

(30) Priority: 16.04.2021 TW 110113694
(71) Applicant: National Chung Hsing University, Taichung City 402 (TW)
(72) Inventor: LIN, Kuan-Jiuh, Taichung City 402 (TW); SU, Jun Wei, Chiayi City 600 (TW)
(74) Representative: Hoffmann Eitle

(57) **Abstract**

A method of calculating a carbon credit includes performing, for each segment of a route, a segmental carbon-emission calculation procedure to calculate a segmental carbon emission amount, calculating a one-trip carbon emission amount for this round of taking the route by adding up the segmental carbon emission amounts of all segments, calculating a one-trip emission comparison amount based on the one-trip carbon emission amount and a carbon emission average amount, adding the one-trip emission comparison amount to a cumulative comparison carbon credit, outputting the cumulative comparison carbon credit thus updated, and updating the carbon emission average amount.

## Description

The disclosure relates to statistical management of carbon emission, and more particularly to a method of calculating a carbon credit.

In order to reduce global warming, many countries have signed several important treaties, such as Kyoto Protocol, Paris Agreement, etc., to limit the total global greenhouse gas emissions, in an attempt to reduce the impact of greenhouse gases on the increase in global average temperature. In some countries, carbon dioxide is the largest among the greenhouse gas emissions.

For developed countries, the cost and difficulty of reducing existing carbon emissions are quite high, so the United Nations approved a carbon emission trading system that makes the right to emit carbon dioxide (referred to as a carbon credit) a commodity for trade. In this way, companies or countries can buy carbon credits from another party to obtain greenhouse gas emission reductions.

A conventional approach of calculating a carbon credit is to provide a carbon emission statistical method and have this method be approved in the first year, then to collect carbon emission data for a whole year in the second year, and after a carbon emission baseline has been verified based on the carbon emission data in the second year, to collect carbon emission data for a whole year in the third year, and to compare the carbon emission data in the third year with the carbon emission baseline to obtain the carbon credit. Only when a carbon emission amount in the third year is smaller than the carbon emission baseline does the carbon credit have a positive value.

Accordingly, the conventional approach is time consuming and costly. Usually only large companies have the budget and capacity to implement such approach.

According to the International Transport Forum 2010, transportation is second only to electricity generation in terms of carbon emissions, accounting for 24% of total emissions. However, it is difficult for ordinary people to implement the conventional approach of calculating a carbon credit for their daily commute. Moreover, the commute route may change because of job transfer, school transfer or moving house, and it is not easy to maintain the same commute route for three consecutive years, so carbon credits might not be effectively utilized.

Therefore, an object of the disclosure is to provide a method of calculating a carbon credit that can shorten the time it takes to establish a baseline for carbon emissions and that can alleviate at least one of the drawbacks of the prior art.

The carbon credit is related to an amount of carbon emission saved each round a route is taken. The route includes a plurality of nodes, and a plurality of segments each between adjacent two of the nodes. The method is to be implemented by a portable electronic device and includes:
when the portable electronic is being moved along the route, performing, with respect to each of the segments, a segmental carbon-emission calculation procedure which includes
   obtaining a type of traveling means used to bring the portable electronic device to travel through the segment,
   determining a distance traveled by the portable electronic device through the segment, and
   calculating a segmental carbon emission amount which is a product of the distance and a predefined carbon-emission coefficient that corresponds to the type of traveling means;
after the portable electronic device has been moved to a last one of the nodes, calculating a one-trip carbon emission amount for this round of taking the route by adding up the segmental carbon emission amounts of all the segments of the route;
calculating a one-trip emission comparison amount based on the one-trip carbon emission amount and a carbon emission average amount, which is an average of a plurality of historic one-trip carbon emission amounts calculated previously for the route;
adding the one-trip emission comparison amount to a cumulative comparison carbon credit determined in advance to update the cumulative comparison carbon credit;
outputting the cumulative comparison carbon credit thus updated; and
averaging the one-trip carbon emission amount and the plurality of historic one-trip carbon emission amounts to update the carbon emission average amount.

Other features and advantages of the disclosure will become apparent in the following detailed description of the embodiment(s) with reference to the accompanying drawings, of which:
Figure 1 is a block diagram illustrating a portable electronic device according to an embodiment of the disclosure;
Figure 2 is a flow chart illustrating a method of calculating a carbon credit according to an embodiment of the disclosure; and
Figure 3 is a schematic diagram illustrating an example of carbon emissions of three commute schemes for traveling the same route according to an embodiment of this disclosure.

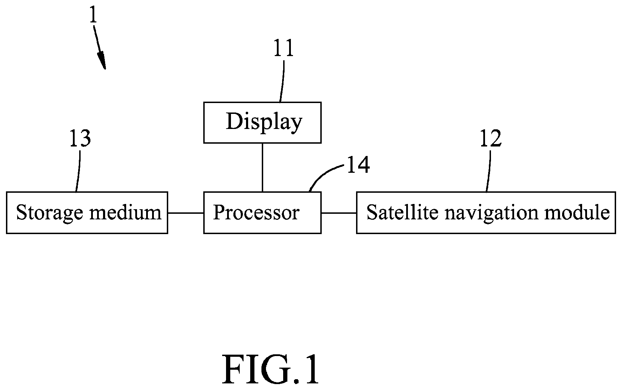

Referring to Figure 1, a portable electronic device 1 according to an embodiment of the disclosure is used to calculate a carbon credit. The portable electronic device 1 includes a display 11, a satellite navigation module 12, a storage medium 13, and a processor 14 that is electrically connected to the display 11, the satellite navigation module 12 and the storage medium 13. In some embodiments, the portable electronic device 1 may be one of a smart phone, a tablet computer, a laptop computer, a smart wearable device, such as a smart watch, and so forth; the display 11 may be a liquid crystal display (LCD), a light-emitting diode (LED) display or an organic LED (OLED) display; the satellite navigation module 12 may be a circuit chip or an electronic module that supports global navigation satellite system (GNSS), such as Global Positioning System (GPS), Global Navigation Satellite System (GLONASS), BeiDou Navigation Satellite System or Galileo positioning system; the storage medium 13 may be a hard disk drive (HDD), a solid-state drive (SSD), flash memory or a memory card; the processor 14 may be a central processing unit (CPU), a microprocessor, an application-specific instruction set processor (ASIP) or a digital signal processor (DSP). It is noted that the portable electronic device 1, the satellite navigation module 12, the storage medium 13 and the processor 14 are not limited to the aforementioned examples, and are able to be implemented by other devices, modules, chips or circuits which are capable of performing the operations introduced in this disclosure.

The satellite navigation module 12 determines where the portable electronic device 1 is located at successive time instances so as to obtain a plurality of locations of the portable electronic device 1.

The storage medium 13 stores a plurality of predefined carbon-emission coefficients that correspond respectively to different types of traveling means, a carbon emission average amount, a plurality of historic one-trip carbon emission amounts that correspond to the carbon emission average amount, a cumulative comparison carbon credit, and a cumulative difference carbon credit. The carbon emission average amount is an average of the plurality of historic one-trip carbon emission amounts that were previously calculated for the route.

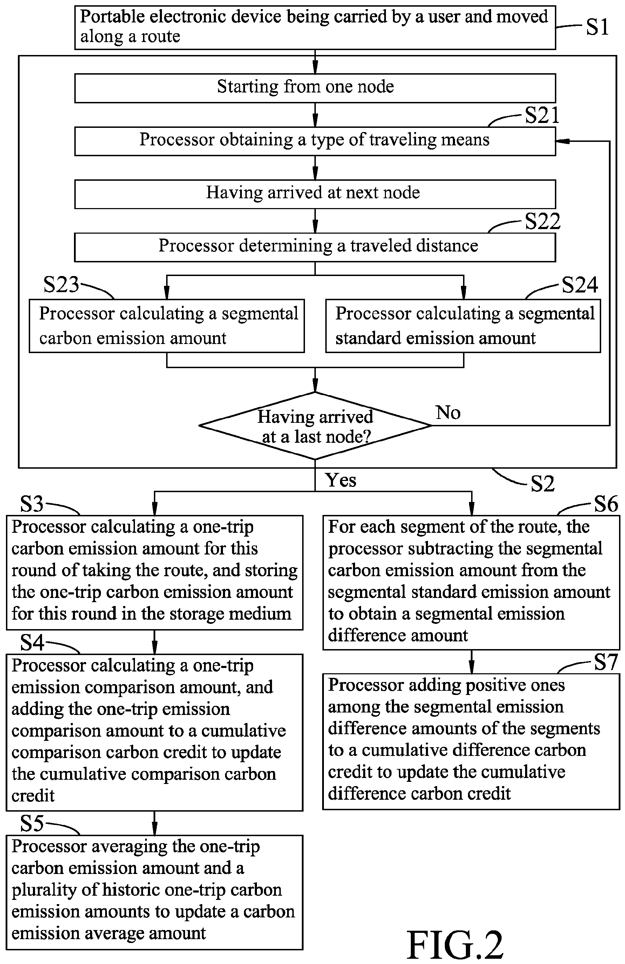

Referring to Figure 2, a method of calculating a carbon credit according to an embodiment of the disclosure is illustrated. The method may be implemented by, for example but not limited to, the portable electronic device 1 shown in Figure 1. The carbon credit is related to an amount of carbon emission saved each round a route is taken. The route includes a plurality of nodes, and a plurality of segments each between adjacent two of the nodes. The method includes the following steps S1 to S7.

In step S1, the portable electronic device 1 is carried by a user and is moved along the route.

In step S2, when the portable electronic device 1 is being moved along the route, the portable electronic device 1 performs, with respect to each of the segments of the route, a segmental carbon-emission calculation procedure. The segmental carbon-emission calculation procedure includes substeps of S21 to S24.

In sub-step S21, the processor 14 obtains a type of the traveling means the user uses to pass through the segment, bringing along the portable electronic device 1. For example, if, to travel through the segment, the user is taking a bus, driving a passenger vehicle (referred to as a car hereinafter), riding a motorcycle, or riding a bicycle, then the type of traveling means would be a bus, a car, a motorcycle or a bicycle. In some embodiments, the user may travel through the segment on foot. In such case, the type of traveling means may be "on foot". In some embodiments, the processor 14 obtains the type of traveling means according to user input. For example, the user may select from a dropdown menu an option indicating the type of traveling means for traveling through the segment. In some embodiments, the portable electronic device 1 includes an input interface (not shown) for receiving the user input, such as a keyboard, a touch panel, or a touch screen that realizes the input interface and the display 11 at the same time.

In sub-step S22, the processor 14 determines a traveled distance of the portable electronic device 1 through the segment (a distance traveled by the portable electronic device to pass from a starting node of the segment to a terminating node of the segment). Specifically, the processor 14 calculates the traveled distance based on the locations determined by the satellite navigation module 12 while the portable electronic device 1 traveled through the segment.

In sub-step S23, the processor 14 calculates a segmental carbon emission amount which is a product of the traveled distance determined in sub-step S22 and one of the predefined carbon-emission coefficients that corresponds to the type of traveling means obtained in sub-step S21. The processor 14 stores the segmental carbon emission amount thus calculated in the storage medium 13.

In sub-step S24, the processor 14 calculates a segmental standard emission amount which is a product of the traveled distance determined in sub-step S22 and a smallest carbon-emission coefficient, which is the smallest one among the predefined carbon-emission coefficients. In some embodiments, the smallest carbon-emission coefficient is the smallest one among the predefined carbon-emission coefficients excluding the carbon-emission coefficient that corresponds to the type of traveling means of "on foot". In some embodiments, information regarding the potential traveling means with respect to the segment may be provided to the processor 14 via user input. In this case, the user may select, from a menu, options indicating the types of potential traveling means available for the user to travel through the segment.

For example, with respect to each of the segments, when the segment matches a bus route, a train route and/or a rapid transit route (i.e., the nodes at two ends of the segment correspond to two stations of a public transport route), the smallest one among carbon emissions of the bus, the train and/or the rapid transit is used as a basis for calculating the segmental standard emission amount. When the segment does not match any bus route, train route or rapid transit route, the carbon emission of a motorcycle is used as a basis for calculating the segmental standard emission amount.

In step S3, after the portable electronic device 1 has been moved to a last one of the nodes, the processor 14 calculates a one-trip carbon emission amount for this round of taking the route by adding up the segmental carbon emission amounts of all the segments of the route. The processor 14 then stores the one-trip carbon emission amount for this round in the storage medium 13, which will serve as an additional historic one-trip carbon emission amount for the next round taking the route. In some embodiments, the processor 14 determines whether the portable electronic device 1 has been moved to the last one of the nodes based on the locations determined by the satellite navigation module 12, that is, based on whether a current location of the portable electronic device 1 matches a predefined destination of the route. In other embodiments, the processor 14 may determine whether the portable electronic device 1 has been moved to the last one of the nodes according to user input, e.g., based on whether a specific physical button or a virtual button of the portable electronic device 1 is operated.

In step S4, the processor 14 calculates a one-trip emission comparison amount based on the one-trip carbon emission amount calculated in step S3 and the carbon emission average amount, which is stored in the storage medium 13. The processor 14 then adds the one-trip emission comparison amount thus calculated to the cumulative comparison carbon credit, which is determined in advance and stored in the storage medium 13, to update the cumulative comparison carbon credit. In some embodiments, the cumulative comparison carbon credit stored in the storage medium 13 is equal to zero prior to the user's first time of taking the route. The portable electronic device 1 outputs the cumulative comparison carbon credit thus updated. Specifically, the processor 14 controls the display 11 to display the cumulative comparison carbon credit thus updated.

In some embodiments, the one-trip emission comparison amount is calculated in such a manner that when the carbon emission average amount is larger than the one-trip carbon emission amount, the processor 14 subtracts the one-trip carbon emission amount from the carbon emission average amount to obtain the one-trip emission comparison amount, and that when the carbon emission average amount is smaller than or equal to the one-trip carbon emission amount, the processor 14 assigns zero to the one-trip emission comparison amount. However, in other embodiments, the processor 14 may directly subtract the one-trip carbon emission amount from the carbon emission average amount to obtain the one-trip emission comparison amount, that is to say, the one-trip emission comparison amount may have a negative value.

In step S5, the processor 14 averages the one-trip carbon emission amount and the historic one-trip carbon emission amounts, which correspond to the carbon emission average amount and which were previously calculated for the route, to update the carbon emission average amount. Specifically, the processor 14 averages the one-trip carbon emission amount and the historic one-trip carbon emission amounts to obtain an average value, and stores the average value as the carbon emission average amount in the storage medium 13 so as to update the carbon emission average amount.

In step S6, after the portable electronic device 1 has been moved to the last one of the nodes, for each of the segments, the processor 14 subtracts the segmental carbon emission amount calculated in sub-step S23 from the segmental standard emission amount calculated in sub-step S24 to obtain a segmental emission difference amount.

In step S7, the processor 14 adds positive ones among the segmental emission difference amounts of the segments to the cumulative difference carbon credit, which is determined in advance and stored in the storage medium 13, to update the cumulative difference carbon credit. In some embodiments, the cumulative difference carbon credit stored in the storage medium 13 is equal to zero prior to the user's first time of taking the route. The positive ones among the segmental emission difference amounts are those of the segmental emission difference amounts that have positive values. Specifically, the processor 14 adds the positive ones among the segmental emission difference amounts of the segments to the cumulative difference carbon credit stored in the storage medium 13 to obtain a sum, and stores the sum as the cumulative difference carbon credit in the storage medium 13 so as to update the cumulative difference carbon credit. The portable electronic device 1 outputs the cumulative difference carbon credit thus updated. Specifically, the processor 14 controls the display 11 to display the cumulative difference carbon credit thus updated.

It is noted that the cumulative comparison carbon credit calculated in step S4 and the cumulative difference carbon credit obtained in step S7 are carbon credits calculated using different methodologies, and the user may select one of these two types of carbon credits that is most beneficial for subsequent carbon emission trading. Accordingly, in some embodiments, when receiving a user selection of one of the cumulative comparison carbon credit and the cumulative difference carbon credit (referred to as a selected carbon credit hereinafter), the portable electronic device 1 transmits the selected carbon credit to a server (not shown) that is in communication with the portable electronic device 1 to allow the server to conduct carbon emission trading using the selected carbon credit.

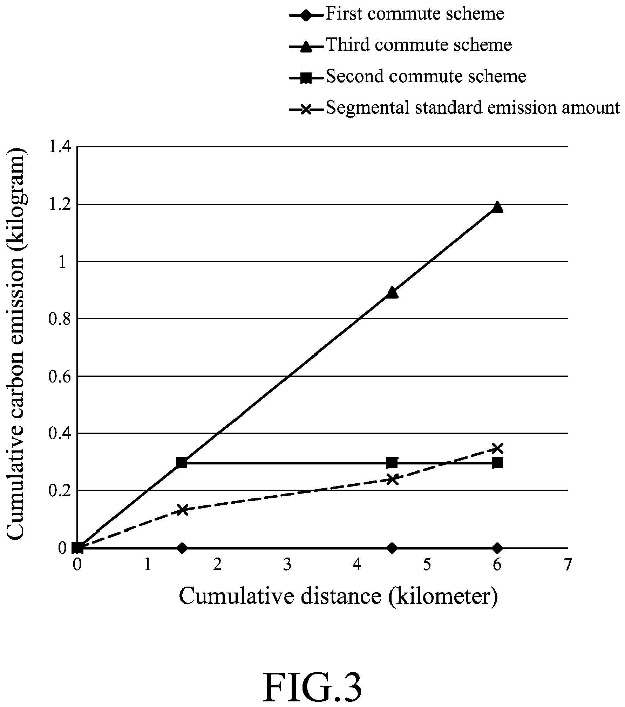

Referring to Tables 1 to 4 below and Figure 3, a route with a total length of 6 kilometers is taken as an example to explain the method of calculating a carbon credit according to an embodiment of the disclosure. In this case, the route is a commute route. Since a commute route is usually highly repetitive and consistent, using a commute route for carbon credits calculation and certification is practical and worthwhile. The route includes three segments which have distances of 1.5 kilometers (i.e., 0 km to 1.5 km of the route), 3 kilometers (i.e., 1.5 km to 4.5 km of the route) and 1.5 kilometers (i.e., 4.5 km to 6 km of the route), respectively.

In a first commute scheme, the traveling means utilized in the three segments are "on foot", bicycle and bicycle, respectively. Accordingly, the one-trip carbon emission amount for this round of taking the route is 0 kilograms.

In a second commute scheme, the traveling means utilized in the three segments are car, bicycle and bicycle, respectively. Accordingly, the one-trip carbon emission amount for this round of taking the route is 0.297 kilograms.

In a third commute scheme, the traveling means utilized in the three segments are all cars. Accordingly, the one-trip carbon emission amount for this round of taking the route is 1.19 kilograms.

When calculating the segmental standard emission amounts for the respective three segments, it is assumed as an example that the segment between 0 km and 1.5 km and the segment between 4.5 km and 6 km do not match any bus route or train route or rapid transit route while the segment between 1.5 km and 4.5 km matches a bus route. Therefore, for the segment between 0 km and 1.5 km, the segment between 1.5 km and 4.5 km, and the segment between 4.5 km and 6 km, the carbon emissions of a motorcycle, a bus, and a motorcycle are respectively used as bases for calculating the segmental standard emission amounts. In some embodiments, the segmental standard emission amount of the segment between 1.5 km and 4.5 km is calculated by dividing the carbon emission of a bus by an average number of passengers on the bus, e.g., 20. A sum of the segmental standard emission amounts of the three segments is 0.37 kilogram.

**Table 1 (carbon emissions in the route for three commute schemes)**

| Route (kilometers) | | 0-1.5 | 1.5-4.5 | 4.5-6 | Sum |
|---|---|---|---|---|---|
| First commute scheme | Traveling Means | "On foot" | Bicycle | Bicycle | |
| | Carbon emission (kilograms) | 0 | 0 | 0 | 0 |
| Second commute scheme | Traveling Means | Car | Bicycle | Bicycle | |
| | Carbon emission (kilograms) | 0.297 | 0 | 0 | 0.297 |
| Third commute scheme | Traveling Means | Car | Car | Car | |
| | Carbon emission (kilograms) | 0.297 | 0.595 | 0.297 | 1.19 |
| Segmental standard emission amount | Traveling Means | Motorcycle | Bus | Motorcycle | |
| | Carbon emission (kilograms) | 0.131 | 0.108 | 0.131 | 0.37 |

It is noted that in some embodiments, other than the predefined carbon-emission coefficient for the type of traveling means of "on foot", the predefined carbon-emission coefficients that correspond respectively to the other different types of potential traveling means are carbon emission coefficients related to gasoline-fueled vehicles. However, in other embodiments, they may be carbon emission coefficients related to electric vehicles, which may be calculated according to carbon emission coefficients of electric vehicles announced by the government, or may alternatively be calculated based on electricity consumed by electric vehicles per kilometer and carbon emission coefficient of electricity consumption announced by the government.

Referring to Table 2, a five-day commute routine, where the third commute scheme is adopted for the first four days while the first commute scheme is adopted for the fifth day, is given as an example for explanation. The cumulative comparison carbon credit obtained on the fifth day is 1.19 while the cumulative difference carbon credit obtained on the fifth day is only 0.37. This is because a scheme with a relatively higher carbon emission, i.e., the third commute scheme, is selected for the first four days, making the reduction in carbon emission on the fifth day significantly higher in comparison with the carbon emission average amounts of the first four days. Using only the cumulative difference carbon credit of 0.37 as the amount of carbon emission saved would underestimate an actual amount of carbon emission saved. Therefore, in this case, the cumulative comparison carbon credit of 1.19 is more representative of the actual amount of carbon emission saved. In this way, a user may be motivated to switch his/her habitual commute scheme to a commute scheme with lower carbon emissions so as to obtain an even higher cumulative comparison carbon credit.

**Table 2 (a first case of cumulative comparison carbon credit and cumulative difference carbon credit)**

| Day | First day | Second day | Third day | Fourth day | Fifth day |
|---|---|---|---|---|---|
| Commute scheme | Third commute scheme | Third commute scheme | Third commute scheme | Third commute scheme | First commute scheme |
| One-trip carbon emission amount | 1.19 | 1.19 | 1.19 | 1.19 | 0 |
| carbon emission average amount | 0 | 1.19 | 1.19 | 1.19 | 1.19 |
| One-trip emission comparison amount | 0 | 0 | 0 | 0 | 1.19 |
| Cumulative comparison carbon credit | 0 | 0 | 0 | 0 | 1.19 |
| Updated carbon emission average amount | 1.19 | 1.19 | 1.19 | 1.19 | 0.952 |
| Segmental emission difference amount for 0-1.5 km | -0.166 | -0.166 | -0.166 | -0.166 | 0.131 |
| Segmental emission difference amount for 1.5-4.5 km | -0.487 | -0.487 | -0.487 | -0.487 | 0.108 |
| Segmental emission difference amount for 4.5-6 km | -0.166 | -0.166 | -0.166 | -0.166 | 0.131 |
| Cumulative difference carbon credit | 0 | 0 | 0 | 0 | 0.37 |
| Note: only positive ones among the segmental emission difference amounts of the segments are added to the cumulative difference carbon credit | | | | | |

Referring to Table 3, a five-day commute routine, where the first commute scheme is adopted for all five days, is given as an example for explanation. Since the one-trip carbon emission amount of each day is zero, the cumulative comparison carbon credit obtained for each day is also zero. However, since a commute scheme which has a carbon emission lower than each of the segmental standard emission amounts is chosen, the cumulative difference carbon credit of 1.85 obtained on the fifth day is more representative of the actual amount of carbon emission saved in this case. In this way, a user may be motivated to build a long-term habit of adopting a commute scheme with carbon emissions lower than the segmental standard emission amounts so as to obtain a higher cumulative difference carbon credit.

**Table 3 (a second case of cumulative comparison carbon credit and cumulative difference carbon credit)**

| Day | First day | Second day | Third day | Fourth day | Fifth day |
|---|---|---|---|---|---|
| Commute scheme | First commute scheme | First commute scheme | First commute scheme | First commute scheme | First commute scheme |
| One-trip carbon emission amount | 0 | 0 | 0 | 0 | 0 |
| carbon emission average amount | 0 | 0 | 0 | 0 | 0 |
| One-trip emission comparison amount | 0 | 0 | 0 | 0 | 0 |
| Cumulative comparison carbon credit | 0 | 0 | 0 | 0 | 0 |
| Updated carbon emission average amount | 0 | 0 | 0 | 0 | 0 |
| Segmental emission difference amount for 0-1.5 km | 0.131 | 0.131 | 0.131 | 0.131 | 0.131 |
| Segmental emission difference amount for 1.5-4.5 km | 0.108 | 0.108 | 0.108 | 0.108 | 0.108 |
| Segmental emission difference amount for 4.5-6 km | 0.131 | 0.131 | 0.131 | 0.131 | 0.131 |
| Cumulative difference carbon credit | 0.37 | 0.74 | 1.11 | 1.48 | 1.85 |
| Note: only positive ones among the segmental emission difference amounts of the segments are added to the cumulative difference carbon credit | | | | | |

Referring to Table 4, a five-day commute routine, where the second commute scheme, the second commute scheme, the first commute scheme, the third commute scheme and the second commute scheme are respectively adopted for the first to fifth days, is given as an example for explanation. With respect to the second day, since the same commute scheme is adopted for the first and second days, the one-trip carbon emission amount of the second day is identical to the carbon emission average amount before the update (i.e., the one-trip carbon emission amount of the first day), and the cumulative comparison carbon credit of the second day is hence zero. On the other hand, since some of the segmental emission difference amounts of the first and second days have positive values (i.e., some of the segmental carbon emission amounts are lower than the corresponding segmental standard emission amounts), the cumulative difference carbon credit of the second day reaches 0.478.

With respect to the fourth day, since the third commute scheme adopted for the fourth day has a higher one-trip carbon emission amount than the other days, the carbon emission average amount before the update (0.198) is lower than the one-trip carbon emission amount of the fourth day (1.19). Therefore, the one-trip emission comparison amount of the fourth day is zero, and the cumulative comparison carbon credit of the fourth day is kept the same as that of the third day (0.297). On the other hand, since all of the segmental emission difference amounts of the fourth day have negative values, the cumulative difference carbon credit of the fourth day is identical to that of the third day.

A user may be motivated to choose a vehicle having a lower carbon emission after considering the distance of each segment in the route and the time it takes to travel through the segment, so as to obtain higher cumulative comparison carbon credit and cumulative difference carbon credit.

**Table 4 (a third case of cumulative comparison carbon credit and cumulative difference carbon credit)**

| Day | First day | Second day | Third day | Fourth day | Fifth day |
|---|---|---|---|---|---|
| Commute scheme | Second commute scheme | Second commute scheme | First commute scheme | Third commute scheme | Second commute scheme |
| One-trip carbon emission amount | 0.297 | 0.297 | 0 | 1.19 | 0.297 |
| carbon emission average amount | 0 | 0.297 | 0.297 | 0.198 | 0.446 |
| One-trip emission comparison amount | 0 | 0 | 0.297 | 0 | 0.149 |
| Cumulative comparison carbon credit | 0 | 0 | 0.297 | 0.297 | 0.446 |
| Updated carbon emission average amount | 0.297 | 0.297 | 0.198 | 0.446 | 0.4162 |
| Segmental emission difference amount for 0-1.5 km | -0.166 | -0.166 | 0.131 | -0.166 | -0.166 |
| Segmental emission difference amount for 1.5-4.5 km | 0.108 | 0.108 | 0.108 | -0.487 | 0.108 |
| Segmental emission difference amount for 4.5-6 km | 0.131 | 0.131 | 0.131 | -0.166 | 0.131 |
| Cumulative difference carbon credit | 0.239 (=0+0.108 +0.131) | 0.478 (=0.239+0. 108+0.131) | 0.848 (=0.478+0. 131+0.108 +0.131) | 0.848 | 1.087 (=0.848+0. 108+0.131) |
| Note: only positive ones among the segmental emission difference amounts of the segments are added to the cumulative difference carbon credit | | | | | |

Accordingly, the method of calculating a carbon credit of this disclosure at least has the following advantages.
1. Since the user can utilize the portable electronic device 1 to calculate the one-trip carbon emission amount for each round of taking the route, and to update the carbon emission average amount, which serves as a basis for calculating the one-trip carbon emission amount for the next round, it does not take years to establish a carbon emission baseline, which can effectively shorten the time to establish the carbon emission baseline.
2. By shortening the time it takes to establish a carbon emission baseline, users can easily accumulate the carbon credits from their daily commute, thus allowing for effective use of carbon credits.
3. For users who often choose commute schemes with lower carbon emissions, this method also calculates the cumulative difference carbon credit, which is based on the segmental standard emission amounts, so as to avoid underestimation of carbon credits.
4. Since the route may be a commute route, which is highly repetitive and consistent, it is a practical and worthwhile option for carbon credits calculation and certification.

It is noted that in other embodiments, the plurality of predefined carbon-emission coefficients, which correspond respectively to different types of traveling means and which are stored in the storage medium 13, each include multiple values that correspond respectively to different speeds. In sub-step S23, the processor 14 calculates an average speed of the portable electronic device 1 while traveling through the segment based on the locations determined by the satellite navigation module 12 while the portable electronic device 1 traveled through the segment, and multiplies the traveled distance determined in sub-step S22 by a target value of the predefined carbon-emission coefficient which corresponds to the type of traveling means obtained in sub-step S21 to obtain the segmental carbon emission amount, wherein the target value is one of the multiple values that corresponds to the average speed of the portable electronic device 1.

In some embodiments, it is also possible to use vehicle conditions, road classification (e.g., local road, expressway) and road or traffic conditions (e.g., a traffic congestion) as adjustment parameters for the predefined carbon-emission coefficients.

To sum up, the method of calculating a carbon credit according to this disclosure uses the portable electronic device 1 to calculate the one-trip carbon emission amount for each round of taking the route, and to update the carbon emission average amount, which serves as a calculation basis for future carbon credit computation. Therefore, it can effectively shorten the time to establish the carbon emission baseline. Moreover, with respect a user who usually adopts a commute scheme with a low carbon emission, the method can utilize the segmental standard emission amounts as bases for calculating the cumulative difference carbon credit, so as to avoid underestimation of carbon credits.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method of calculating a carbon credit which is related to an amount of carbon emission saved each round a route is taken, the route including a plurality of nodes, and a plurality of segments each between adjacent two of the nodes, the method to be implemented by a portable electronic device (1) and **characterized by**:
when the portable electronic is being moved along the route, performing, with respect to each of the segments, a segmental carbon-emission calculation procedure which includes
obtaining a type of traveling means used to bring the portable electronic device (1) to travel through the segment,
determining a distance traveled by the portable electronic device (1) through the segment, and
calculating a segmental carbon emission amount which is a product of the distance and a predefined carbon-emission coefficient that corresponds to the type of traveling means;
after the portable electronic device (1) has been moved to a last one of the nodes, calculating a one-trip carbon emission amount for this round of taking the route by adding up the segmental carbon emission amounts of all the segments of the route;
calculating a one-trip emission comparison amount based on the one-trip carbon emission amount and a carbon emission average amount, which is an average of a plurality of historic one-trip carbon emission amounts calculated previously for the route;
adding the one-trip emission comparison amount to a cumulative comparison carbon credit determined in advance to update the cumulative comparison carbon credit;
outputting the cumulative comparison carbon credit thus updated; and
averaging the one-trip carbon emission amount and the plurality of historic one-trip carbon emission amounts to update the carbon emission average amount.

2. The method as claimed in claim 1, wherein calculating a one-trip emission comparison amount includes:
when the carbon emission average amount is larger than the one-trip carbon emission amount, subtracting the one-trip carbon emission amount from the carbon emission average amount to obtain the one-trip emission comparison amount; and
when the carbon emission average amount is not larger than the one-trip carbon emission amount, assigning zero to the one-trip emission comparison amount.

3. The method as claimed in one of claims 1 and 2, the portable electronic device (1) including a display (11), a satellite navigation module (12), a storage medium (13), and a processor that is electrically connected to the display (11), the satellite navigation module (12) and the storage medium (13), the storage medium (13) storing a plurality of predefined carbon-emission coefficients that correspond respectively to different types of traveling means, the carbon emission average amount, the plurality of historic one-trip carbon emission amounts, and the cumulative comparison carbon credit,
wherein determining a distance includes:
by the satellite navigation module (12), determining locations of the portable electronic device (1) at successive time instances while the portable electronic device (1) traveled through the segment; and
by the processor, calculating the distance based on the locations determined by the satellite navigation module (12);
wherein outputting the cumulative comparison carbon credit includes displaying, by the display (11), the cumulative comparison carbon credit thus updated.

4. The method as claimed in claim 3, wherein the segmental carbon-emission calculation procedure further includes:
calculating a segmental standard emission amount which is a product of the distance and a smallest carbon-emission coefficient, which is a smallest one among a plurality of predefined carbon-emission coefficients that correspond respectively to different types of potential traveling means for the segment;
the method further comprising:
after the portable electronic device (1) has been moved to the last one of the nodes, for each of the segments, subtracting the segmental carbon emission amount from the segmental standard emission amount to obtain a segmental emission difference amount;
adding positive ones among the segmental emission difference amounts of the segments to a cumulative difference carbon credit determined in advance to update the cumulative difference carbon credit; and
outputting the cumulative difference carbon credit thus updated.

5. The method as claimed in claim 4, the storage medium (13) further storing the cumulative difference carbon credit determined in advance, wherein adding positive ones among the segmental emission difference amounts to a cumulative difference carbon credit includes:
adding the positive ones among the segmental emission difference amounts of the segments to the cumulative difference carbon credit stored in the storage medium (13) to obtain a sum; and
storing the sum as the cumulative difference carbon credit in the storage medium (13) so as to update the cumulative difference carbon credit.

6. The method as claimed in any of claims 3 to 5, each of the plurality of predefined carbon-emission coefficients, which correspond respectively to different types of traveling means and which are stored in the storage medium (13), including multiple values that correspond respectively to different speeds, wherein calculating a segmental carbon emission amount includes:
by the processor, calculating an average speed of the portable electronic device (1) when traveling through the segment based on the locations determined by the satellite navigation module (12);
by the processor, multiplying the distance by a target value of the predefined carbon-emission coefficient that corresponds to the type of traveling means to obtain the segmental carbon emission amount, the target value being one of the multiple values of the predefined carbon-emission coefficient that corresponds to the average speed of the portable electronic device (1).
